# EUROPEAN PATENT APPLICATION

(11) **EP 1 699 188 A1**
(43) Date of publication of application: **06.09.2006**
(21) Application number: 06004415.3
(22) Date of filing: 03.03.2006
(51) Int. Cl.: H04L 12/56

(54) **Method for establishing communication path between heterogeneous radio access networks**

(30) Priority: 03.03.2005 KR 2005017847
(71) Applicant: Samsung Electronics Co., Ltd., Yeongtong-gu Suwon-si, Gyeonggi-do (KR)
(72) Inventor: Park, Chi-Hyun, Suwon-si, Gyeonggi-do (KR)
(74) Representative: Grünecker, Kinkeldey, Stockmair & Schwanhäusser Anwaltssozietät

(57) **Abstract**

A mobile node (MN) connected to a first radio network transmits location information of a correspondent node (CN) to a base station (BS) constituting a second radio network. The BS determines whether it can establish a data transmission path to the CN, using network contract information of the second radio network and the location information of the CN. If the BS can establish the data transmission path, it determines a data transmission path to the CN using the network contract information of the second radio network and the location information of the CN, and transmits an identifier (ID) of the second radio network and service connection possibility/impossibility information to the MN. The MN establishes a connection to the second radio network, and communicates with the CN via the data transmission path.

## Description

The present invention relates generally to a device and a method for establishing a communication path between heterogeneous radio access networks, and in particular, to a method for newly establishing a communication path in a situation where vertical handoff (VHO) to a heterogeneous network is required.

The currently available radio access schemes include among others Wireless Local Area Network (WLAN), Personal Communications Services (PCS) and Satellite Mobile Communication, increasing diversification.

In this situation, it is difficult to use horizontal handoff such as the existing soft handoff and hard handoff, as the handoff method between heterogeneous networks supporting different radio access schemes. Conventionally, in order to address this problem, a communication contract is made between heterogeneous radio access networks, and information on the network contracted with the network to which a particular mobile node (MN) is currently connected is provided to the MN, thereby enabling the VHO.

The VHO between heterogeneous radio access networks including, for example, WLAN and 3^{rd} Generation (3G) Public Land Mobile Network (PLMN) can be performed as follows.

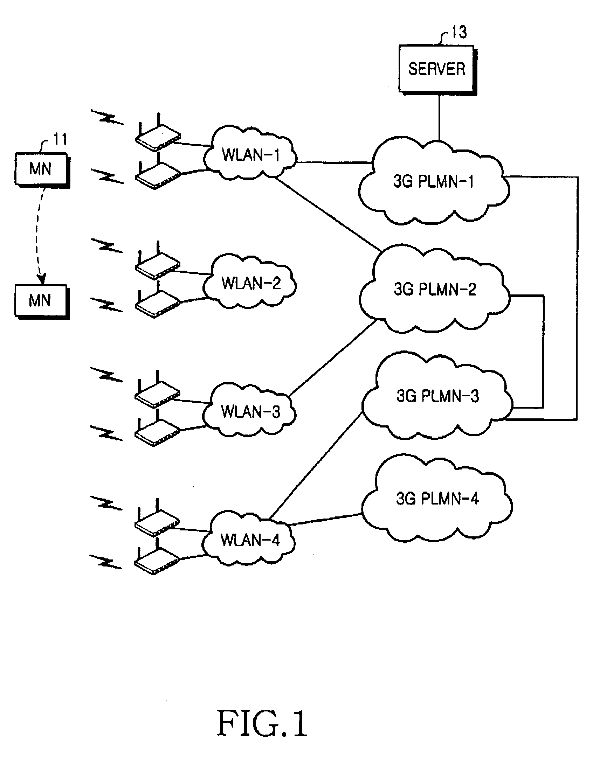

In FIG. 1, an MN 11 has moved from a WLAN-1 to a WLAN-2. The MN 11 was connected to a server 13 via the WLAN-1 and a 3G PLMN-1 before the movement. However, the WLAN-2 is not contracted with the 3G PLMN-1. Therefore, the MN 11 cannot communicate with the server 13 after movement.

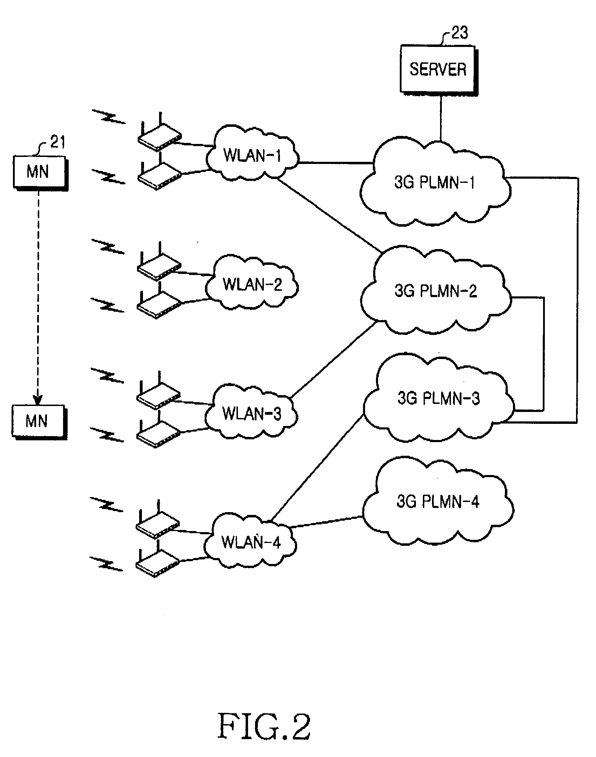

However, when an MN 21 has moved from a WLAN-1 to a WLAN-3 as shown in FIG. 2, it can communicate with a server 23. The WLAN-3 is directly contracted only with a 3G PLMN-2, and is not directly contracted with a 3G PLMN-1. However, the WLAN-3 can connect with the 3G PLMN-1 via the 3G PLMN-2 and a 3G PLMN-3, or via the 3G PLMN-2 and the WLAN-1. Therefore, the MN 21 can continue to communicate with the server 23.

In the foregoing description, it is assumed that a correspondent node (CN) is fixed in location. However, it can also be assumed that the CN is not fixed in location.

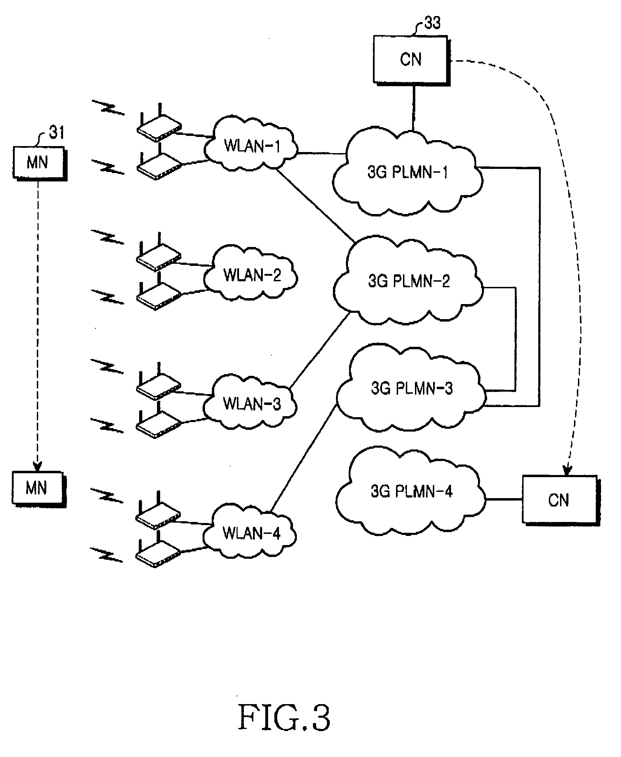

In FIG. 3, an MN 31 has moved from a WLAN-1 to a WLAN-4 and a CN 33 has moved from a 3G PLMN-1 to a 3G PLMN-4. If only the MN 31 has moved, it can continue to communicate with the CN 33 via a path of WLAN-4, 3G PLMN-3, 3G PLMN-2, and WLAN-1. In addition, even if the CN 33 has moved, a new communication path can be established. However, if the CN 33 has moved to the 3G PLMN-4, a new communication path cannot be established because the 3G PLMN-4 is not contracted by any means with the WLAN-4 to which the MN 31 is connected.

In the foregoing heterogeneous radio access networks, an MN should establish a new communication path as it moves. To this end, the conventional MN is provided with information on a contracted network from a target base station (BS) to which it intends to move, and should establish a new communication path based on the network information.

Conventionally, the MN establishes a new communication path using only the network contract information. Therefore, even though a CN moves to a network with which the MN cannot communicate, the MN attempts to continue the communication because it cannot be aware of the movement of the CN to the incommunicable network. In order to solve this problem, the CN, whenever it moves, must continuously provide the MN with information indicating possibility/impossibility of the continuous communication, causing a decrease in the efficiency.

It is the object of the present invention is to provide a method for establishing a new communication path for handoff using contract information between heterogeneous radio access networks and location information of a CN.

This object is solved by the subject matter of the independent claims.

Preferred embodiments are defmed by the subject matter of the dependent claims.

An aspect of the present invention is to provide a method for establishing a data transmission path using contract information between networks and location information of a CN in a serving BS or a target BS during handoff between heterogeneous radio access networks.

Another aspect of the present invention is to provide a method for establishing a data transmission path using network contract information and location information of a CN by an MN during handoff between heterogeneous radio access networks.

According to one aspect of the present invention, a mobile node (MN) transmits network information received from a second radio network and location information of a correspondent node (CN) to a base station (BS) constituting a first radio network. The BS determines whether it can establish a data transmission path between the second radio network and the CN, using network contract information of the first radio network, network information of the second radio network, and the location information of the CN. If the BS can establish the data transmission path, it determines a data transmission path between the second radio network and the CN using the network contract information of the first radio network, the network information of the second radio network, and the location information of the CN, and transmits information on a radio network to which the CN is connected in the determined data transmission path, to the MN. The MN establishes a connection to the second radio network, and communicates with the CN via the data transmission path.

According to another aspect of the present invention, a mobile node (MN) connected to a first radio network transmits location information of a correspondent node (CN) to a base station (BS) constituting a second radio network. The BS determines whether it can establish a data transmission path to the CN, using network contract information of the second radio network and the location information of the CN. If the BS can establish the data transmission path, it determines a data transmission path to the CN using the network contract information of the second radio network and the location information of the CN, and transmits an identifier (ID) of the second radio network and service connection possibility/impossibility information to the MN. The MN establishes a connection to the second radio network, and communicates with the CN via the data transmission path.

According to further another aspect of the present invention, a mobile node (MN) connected to a first radio network receives network information of a second radio network and network contract information from the second radio network, and determines whether it can establish a data transmission path between the second radio network and a correspondent node (CN), using location information of the CN, the network information of the second radio network and the network contract information. If the MN can establish the data transmission path, it determines a data transmission path between the second radio network and the CN using the network information of the second radio network, the network contract information, and the location information of the CN, and transmits information on the determined data transmission path to a base station (BS) constituting the second radio network, thereby establishing a new data transmission path to the CN.

According to yet another aspect of the present invention, there is provided a method for establishing a data transmission path in a radio access network. The includes transmitting, by a mobile node (MN), location information of a correspondent node (CN) to a target base station (BS) to which the MN desires to move or desires to be newly connected; and establishing, by the MN, a connection to the target BS, if a data transmission path is established between the target BS and the CN.

According to still another aspect of the present invention, there is provided a method for establishing a data transmission path in a radio access network. The method includes receiving, by a base station (BS), location information of a correspondent node (CN) from a mobile node (MN); establishing, by the BS, a new data transmission path to the CN using the location information of the CN and network contract information of a radio access network to which the MN desires to move; and sending to the MN a notification indicating establishment of the new data transmission path. Preferably, the BS includes one of a target BS to which the MN desires to move or desires to be newly connected, and a serving BS to which the MN is currently connected.

According to still another aspect of the present invention, there is provided a method for establishing a data transmission path in a radio access network. The method includes of: receiving, by a mobile node (MN), network contract information of a radio access network to which a target base station (BS) belongs, from the target BS; determining, by the MN, a data transmission path to a correspondent node (CN) using location information of the CN and network contract information of the radio access network; and sending, by the MN, a request for establishment of the determined data transmission path, to the target BS. Preferably, the target BS includes a BS to which the MN desires to move or desires to be newly connected.

According to still another aspect of the present invention, there is provided a device that is adapted to operate according to the above methods.

The present invention will become more apparent from the following detailed description when taken in conjunction with the accompanying drawings in which:
FIGs. 1 to 3 are diagrams for a description of the conventional network selection method for handoff between heterogeneous radio access networks;
FIG. 4 is a signaling diagram illustrating a network selection method according to a first embodiment of the present invention;
FIG. 5 is a signaling diagram illustrating a network selection method according to a second embodiment of the present invention;
FIG. 6 is a signaling diagram illustrating a network selection method according to a third embodiment of the present invention; and
FIG. 7 is a signaling diagram illustrating a network selection method according to a fourth embodiment of the present invention.

Preferred embodiments of the present invention will now be described in detail with reference to the annexed drawings. In the following description, a detailed description of known functions and configurations incorporated herein has been omitted for clarity and conciseness.

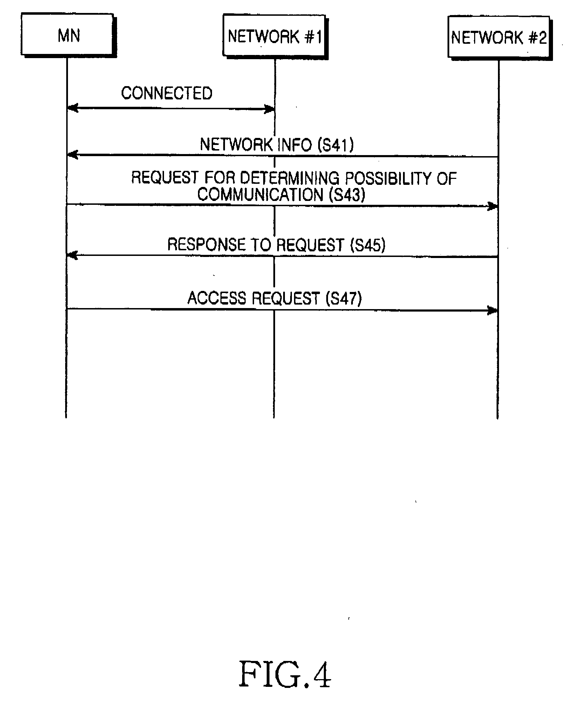

FIG. 4 is a diagram illustrating a signaling procedure for an MN's movement between heterogeneous radio access networks according to a first embodiment of the present invention. Herein, a network #1 and a network #2 use different radio access schemes. This procedure can include an MN and an access device, for example, a base station (BS) or an access point (AP), for allowing the MN to access each network.

An MN connected to a network #1 is provided with network information from a network #2 in step S41. The network information is information that is periodically provided from a network to an MN. Preferably, the MN should be provided with network information from the network #1 and the network #2. For convenience, however, it is shown in FIG. 4 that the MN is provided with the network information only from the network #2. When the network #2 is a WLAN, the network information can be transmitted through a beacon signal including Service Set Identifier (SSID), WLAN NAME, 3rd Generation Partnership Project (3GPP), and Media Country Code (MCC) information

The MN, if it moves to the network #2, transmits to the network #2 a message for determining whether it can continue to communicate with a CN via the network #2 in step S43. The transmission message includes location information of the CN, and in addition thereto, preferably includes SSID, 3GPP, and operator brand. Herein, the location information of the CN can include at least one of an Identifier (ID) of a network to which the CN is connected, Internet Protocol (IP) information of the CN, and an ID of the CN.

The network #2 determines whether it can establish a data transmission path to the CN using inter-network contract information and location information of the CN. The network #2 establishes a data transmission path, i.e., a new communication path, to the CN according to determination result, and then transmits the result information to the MN in step S45. In this case, the network #2 provides the MN with information on the network to which the CN is connected. The MN transmits an access request to the network #2 to continue the communication with the CN in step S47. In this manner, the MN can continuously perform communication with the CN using information on the network to which the CN is connected.

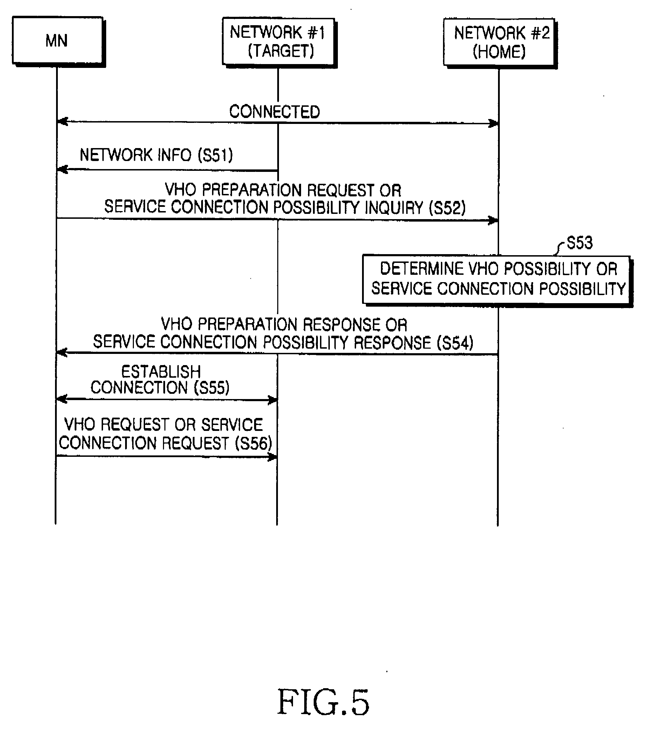

FIG. 5 is a diagram illustrating a signaling procedure for an MN's movement between heterogeneous radio access networks according to a second embodiment of the present invention. Herein, a network #1 and a network #2 use different radio access schemes. This procedure can include an MN and an access device, for example, a BS or an AP, for allowing the MN to access each network. Particularly, in FIG. 5, the network #2 to which the MN is currently connected is called "home," and the network #1 to which the MN will be newly connected is called "target."

An MN connected to a network #2 is provided with network information from a network #1 in step S51. The network information is information that is periodically provided from a network to an MN. Preferably, the MN isprovided with network information from the network #1 and the network #2. For convenience, however, it is shown in FIG. 5 that the MN is provided with the network information only from the network #1. When the network #1 is a 4^{th} Generation (4G) BS, the network information is generally provided through a broadcasting channel, and includes BS ID or a network ID.

The MN transmits a VHO Preparation Request message or a Service Connection Possibility Inquiry message in step S52. The VHO Preparation Request message is used when the MN moves to another network. The Service Connection Possibility Inquiry message (a message for inquiring whether service connection is possible or impossible) is used when the MN desires to newly commence communication with another CN via another network.

The MN, if it moves to the network #1, transmits a VHO Preparation Request message to the network #2 to determine possibility of VHO in step S52. The VHO Preparation Request message includes location information of a CN in communication with the MN and information on the network #1 which is a target network. The location information of the CN can include at least one of an ID of a network to which the CN is connected, IP information of the CN, and an ID of the CN. The information on the network #1 can include an ID of the BS or a network ID.

Alternatively, the MN transmits a Service Connection Possibility Inquiry message to the network #2 in step S52. To this end, the MN should include multiple interfaces. The Service Connection Possibility Inquiry message includes location information of a CN that the MN desires to newly access and information on the network #1. Herein, the network #1 refers to a network that the MN will access to commence a communication service with the new CN. The location information of the CN includes at least one of an ID of a network to which the CN is connected, IP information of the CN, and an ID of the CN. The information on the network #1 can include an ID of the BS or a network ID.

Upon receiving the VHO Preparation Request message, the network #2 determines whether VHO is possible and establishes a data transmission path to the CN according to the determination result in step S53. Thereafter, the network #2 provides the MN with a VHO Preparation Response message in response to the VHO Preparation Request message in step S54. The VHO Preparation Response message includes information indicating whether VHO is possible or impossible (hereinafter referred to as "VHO possibility/impossibility information") and an ID of a network to which the CN is connected. Herein, the ID of the network to which the CN is connected can be an ID of the target network.

Alternatively, upon receiving the Service Connection Possibility Inquiry message, the network #2 determines whether it can connect a service to the new CN and establishes a data transmission path to the CN according to the determination result in step S53. Thereafter, the network #2 transmits a Service Connection Possibility Response message to the MN in response to the Service Connection Possibility Inquiry message in step S54. The Service Connection Possibility Response message includes information indicating possibility/impossibility of service connection (hereinafter referred to as "service connection possibility/impossibility information"), and an ID of a network to which the CN is connected. The ID of the network to which the CN is connected can be an ID of the target network.

After receiving the VHO Preparation Response message or the Service Connection Possibility Response message from the network #2, the MN establishes a connection to the network #1 in step S55, and sends a request for VHO or service connection to the network #1 in step S56. A message used for the VHO or service connection request includes information on the target network and the target BS.

A detailed description will now be made of a method for determining by the network #2 whether VHO or service connection is possible. Herein, determining the possibility/impossibility of VHO or service connection can include a BS, an AP or a network server. In the following description, it will be assumed that the determination involves is a BS.

A BS of the network #2 includes network contract information table shown in Table 1 to determine possibility/impossibility of VHO or service connection.

**Table 1**

| IDs of networks A contracted with network #2 | Location information of networks A | IDs of networks contracted with networks A |
|---|---|---|
| Network_ID 1 | IP_prefix 1 | Network_ID 11 |
| Network_ID 2 | IP_prefix 2 | Network_ID 12 |
| 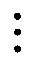 | 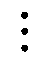 | 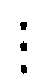 |

As shown in Table 1, the network contract information table of the BS includes network information for at least one network contracted with its own network, location information of the at least one contracted network, and information on at least one network contracted with the at least one contracted network. Preferably, the network information includes a network ID, and the location information of the network includes an IP prefix.

Therefore, upon receiving a VHO Preparation Request message or a Service Connection Possibility Inquiry message, the BS determines whether an ID of a target network included in the received VHO Preparation Request message or Service Connection Possibility Inquiry message is included in IDs of networks A contracted with a network #2. Further, the BS determines whether location information of a CN included in the received VHO Preparation Request message or Service Connection Possibility Inquiry message is included in location information of the networks A contracted with the network #2. Thereafter, the BS establishes a direct path between the target network and the CN using the determination result. In this case, if there is no direct path, the BS establishes a path that can be established via networks contracted with the networks A, between the target network and the CN using IDs of the networks contracted with the networks A.

After establishing the path between the target network and the CN, the BS determines that VHO or service connection is possible, and provides the corresponding information to the MN.

If the network contract information table is included in a BS or a network server, it is also possible to find ID information of the networks contracted with the networks A through message exchange between BSs or networks when establishing a path between the target network and the CN, without including an ID field for the networks contracted with the networks A in the network contract information table.

The operation of determining by the home network whether VHO or service connection is possible according to the second embodiment of the present invention has been described so far. However, this operation can also be performed in a target network according to a third embodiment of the present invention.

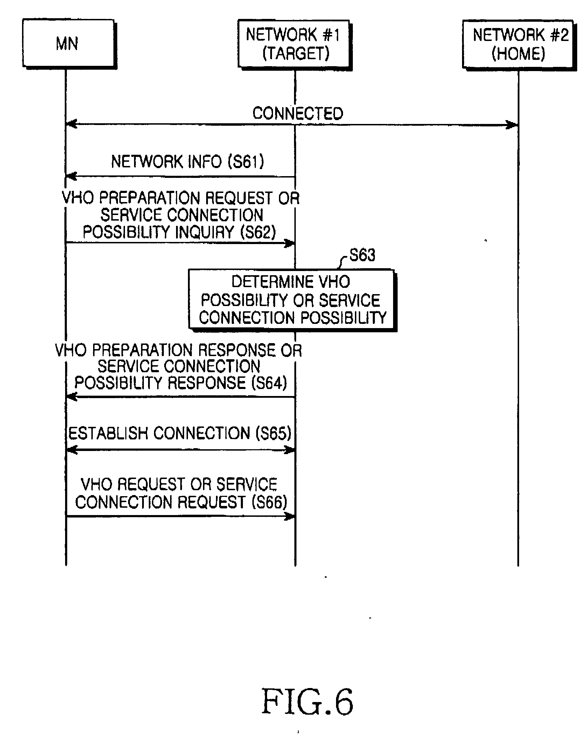

FIG. 6 is a diagram illustrating a signaling procedure for an MN's movement between heterogeneous radio access networks according to a third embodiment of the present invention. Herein, a network #1 and a network #2 use different radio access schemes. This procedure can include an MN and an access device, for example, a BS or an AP, for allowing the MN to access each network. Particularly, in FIG. 6, the network #2 to which the MN is currently connected is called "home," and the network #1 to which the MN will be newly connected is called "target."

An MN connected to a network #2 is provided with network information from a network #1 in step S61. The network information is information that is periodically provided from a network to an MN. Preferably, the MN is provided with network information from the network #1 and the network #2. For convenience, however, it is shown in FIG. 6 that the MN is provided with the network information only from the network #1. For example, when the network #1 is a 4G BS, the network information is generally provided through a broadcasting channel, and includes BS ID or a network ID.

If the MN desires to move to the network #1 and to continue the communication via the network #1, it transmits a VHO Preparation Request message to the network #1 in step S62, in order to determine whether VHO is possible. The VHO Preparation Request message includes location information of a CN and information on the network #1. In this embodiment the VHO Preparation Request message may not include the information on the network #1 because the subject of determining whether VHO is possible is the network # 1 itself. The location information of the CN can include at least one of an ID of a network to which the CN is connected, IP information of the CN, and an ID of the CN. The information on the network #1 can include an ID of the BS or a network ID.

Alternatively, the MN transmits a Service Connection Possibility Inquiry message to the network #1 in step S62. To this end, the MN should include multiple interfaces. The Service Connection Possibility Inquiry message includes location information of a CN that the MN will newly access and information on the network #1. The Service Connection Possibility Inquiry message may not include the information on the network # 1 because the subject of determining whether VHO is possible is the network #1 itself. The location information of the CN includes at least one of an ID of a network to which the CN is connected, IP information of the CN, and an ID of the CN. The information on the network #1 can include an ID of the BS or a network ID.

Upon receiving the VHO Preparation Request message, the network # 1 determines whether VHO is possible and establishes a data transmission path to the CN according to the determination result in step S63. Thereafter, the network #1 provides the MN with a VHO Preparation Response message in response to the VHO Preparation Request message in step S64. The VHO Preparation Response message includes VHO possibility/impossibility information and an ID of a network to which the CN is connected. Herein, the ID of the network to which the CN is connected can be an ID of the target network.

Alternatively, upon receiving the Service Connection Possibility Inquiry message, the network #1 determines whether it can connect a service to the new CN and establishes a data transmission path to the CN according to the determination result in step S63. Thereafter, the network #1 transmits a Service Connection Possibility Response message to the MN in response to the Service Connection Possibility Inquiry message in step S64. The Service Connection Possibility Response message includes service connection possibility/impossibility information, and an ID of a network to which the CN is connected. The ID of the network to which the CN is connected can be an ID of the target network.

After receiving the VHO Preparation Response message or the Service Connection Possibility Response message from the network #1, the MN establishes a connection to the network # 1 in step S65, and sends a request for VHO or service connection to the network #1 in step S66. A message used for the VHO or service connection request includes information on the target network and the target BS.

In order to determine in step S63 whether VHO or service connection is possible, the network #1 includes the network contract information table shown in Table 1.

The operation of determining whether VHO or service connection is possible according to the second and third embodiments is performed in a network. However, the operation can also be performed in an MN according to a fourth embodiment of the present invention.

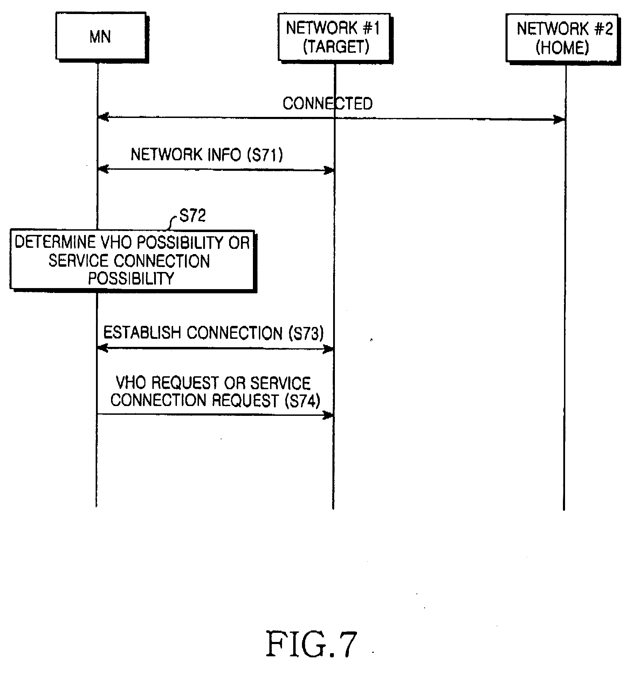

FIG. 7 is a diagram illustrating a signaling procedure for an MN's movement between heterogeneous radio access networks according to a fourth embodiment of the present invention. Herein, a network #1 and a network #2 use different radio access schemes. This procedure can include an MN and an access device, for example, a BS or an AP, for allowing the MN to access each network. Particularly, in FIG. 7, the network #2 to which the MN is currently connected is called "home," and the network #1 to which the MN will be newly connected is called "target."

An MN connected to a network #2 which is a home network is provided with network information from a network #1 in step S71. The network information is information that is periodically provided from a network to an MN. Preferably, the MN is provided with network information from both the network #1 and the network #2. For convenience, however, it is shown in FIG. 7 that the MN is provided with the network information only from the network #1. For example, when the network #1 is a 4G BS, the network information is generally provided through a broadcasting channel, and includes BS ID or a network ID.

Upon detecting a need for VHO, the MN determines in step S72 whether VHO is possible. If VHO is possible, the MN establishes a connection to the network #1 which is a target network in step S73, and sends a request for VHO in step S74. In order to determine whether VHO is possible, the MN requires location information of a CN with which the MN communicates and information on the network #1. The location information of the CN can include an ID of a network to which the CN is connected, IP information of the CN, and an ID of the CN. The information on the network #1 can include an ID of the BS or a network ID, provided in step S71 through the broadcasting channel. A message for the VHO request includes information on the target network and the target BS.

Alternatively, if the MN including multiple interfaces desires to attempt a connection to a new CN via the network #1 regardless of the current connection to the network #2, it determines in step S72 whether service connection with the new CN is possible. If the service connection is possible, the MN establishes a connection to the network #1 in step S73, and sends a request for service connection in step S74. In order to determine whether service connection is possible, the MN requires location information of the new CN with which the MN communicates and information on the network # 1. The location information of the CN can include an ID of a network to which the CN is connected, IP information of the CN, and an ID of the CN. The information on the network #1 can include an ID of the BS or a network ID, provided in step S71 through the broadcasting channel. A message for the service connection request includes information on the target network and the target BS.

The method of determining by the MN whether VHO or service connection is possible in step S72 is performed in the method described in the second embodiment of the present invention by including the network contract information table of Table 1 in the MN, so a detailed description thereof will be omitted herein.

As can be understood from the foregoing description, according to the present invention, an MN determines possibility/impossibility of continuous communication using location information of a CN in communication therewith, making it possible to immediately determine whether the MN can continue the communication with the CN.

In addition, the present invention can immediately establish an efficient data transmission path in a process of determining handoff using location information of a CN.

Further, when an MN determines a network to communicate with a new CN, the MN determines possibility/impossibility of continuous communication using location information of a new CN, making it possible to immediately determine whether the MN can communicate with the CN. In addition, it is possible to immediately determine a required data transmission path.

While the invention has been shown and described with reference to a certain preferred embodiment thereof, it will be understood by those skilled in the art that various changes in form and details may be made therein without departing from the scope of the invention as defined by the appended claims.

## Claims

1. A method for establishing a new data transmission path to a correspondent node by a mobile node connected to a first radio network after moving to a second radio network having an access scheme that is different than the access scheme of the first radio network the method comprising the steps of:
transmitting, by the mobile node, network information received from the second radio network and location information of the correspondent node to a base station constituting the first radio network;
determining by the base station whether it can establish a data transmission path between the second radio network and the correspondent node, using network contract information of the first radio network, network information of the second radio network, and the location information of the correspondent node;
if the base station can establish the data transmission path, determining a data transmission path between the second radio network and the correspondent node using the network contract information of the first radio network, the network information of the second radio network, and the location information of the correspondent node;
transmitting information on a radio network to which the correspondent node is connected in the determined data transmission path, to the mobile node; and
establishing, by the mobile node, a connection to the second radio network, and communicating with the correspondent node via the data transmission path.

2. The method of claim 1, wherein the network contract information includes network information of at least one third radio network contracted with the first radio network and network information of a fourth radio network contracted with the at least one third radio network.

3. The method of claim 2, wherein the base station determines that it can establish a data transmission path if the network contract information includes the network information of the second radio network and the location information of the correspondent node corresponding to the network information of the second radio network.

4. The method of claim 3, wherein the network information of the second through fourth radio networks includes an ID of a corresponding radio network and IP information.

5. The method of claim 4, wherein the location information of the correspondent node includes at least one of an ID of a network to which the correspondent node is connected, IP information of the correspondent node, and an ID of the correspondent node.

6. A method for establishing a new data transmission path to a correspondent node by a mobile node connected to a first radio network after moving to a second radio network having an access scheme that is different than an access scheme of the first radio network the method comprising the steps of:
transmitting, by the mobile node, location information of the correspondent node to a base station constituting the second radio network;
determining by the base station whether it can establish a data transmission path to the correspondent node, using network contract information of the second radio network and the location information of the correspondent node;
if the base station can establish the data transmission path, determining a data transmission path to the correspondent node using the network contract information of the second radio network and the location information of the correspondent node;
transmitting an ID of the second radio network and service connection possibility/impossibility information to the mobile node; and
establishing, by the mobile node, a connection to the second radio network, and communicating with the correspondent node via the data transmission path.

7. The method of claim 6, wherein the network contract information includes network information of at least one third radio network contracted with the second radio network and network information of at least one fourth radio network contracted with the at least one third radio network.

8. The method of claim 7, wherein the base station determines that it can establish a data transmission path if the network contract information includes the network information of the second radio network and the location information of the correspondent node corresponding to the network information of the second radio network.

9. The method of claim 8, wherein the network information of the second through fourth radio networks includes an ID of a corresponding radio network and IP information.

10. The method of claim 9, wherein the location information of the correspondent node includes at least one of an ID of a network to which the correspondent node is connected, IP information of the correspondent node, and an ID of the correspondent node.

11. A method for establishing a new data transmission path to a correspondent node by a mobile node connected to a first radio network after moving to a second radio network having an access scheme that is different than an access scheme of the first radio network the method comprising the steps of:
receiving, by the mobile node, network information of the second radio network and network contract information from the second radio network;
determining by the mobile node whether it can establish a data transmission path between the second radio network and the correspondent node, using location information of the correspondent node, the network information of the second radio network and the network contract information;
if the mobile node can establish the data transmission path, determining a data transmission path between the second radio network and the correspondent node using the network information of the second radio network, the network contract information, and the location information of the correspondent node; and
transmitting, by the mobile node, information on the determined data transmission path to a base station constituting the second radio network, thereby establishing a new data transmission path to the correspondent node.

12. The method of claim 11, wherein the network contract information includes network information of at least one third radio network contracted with the second radio network and network information of at least one fourth radio network contracted with the at least one third radio network.

13. The method of claim 12, wherein the mobile node determines that it can establish a data transmission path if the network contract information includes the network information of the second radio network and the location information of the correspondent node corresponding to the network information of the second radio network.

14. The method of claim 13, wherein the network information of the second through fourth radio networks includes an ID of a corresponding radio network and IP information.

15. The method of claim 14, wherein the location information of the correspondent node includes at least one of an ID of a network to which the correspondent node is connected, IP information of the correspondent node, and an ID of the correspondent node.

16. A method for establishing a data transmission path in a radio access network, the method comprising the steps of:
transmitting, by a mobile node , location information of a correspondent node to a target base station to which the mobile node desires to move or desires to be newly connected; and
establishing, by the mobile node, a connection to the target base station, if a data transmission path is established between the target base station and the correspondent node.

17. The method of claim 16, wherein an access scheme supported by the target base station is different from an access scheme supported by a base station to which the mobile node is currently connected.

18. The method of claim 17, wherein the location information of the correspondent node includes at least one of identification information of a base station to which the correspondent node is connected, Internet protocol information of the correspondent node, and identification information of the correspondent node.

19. A method for establishing a data transmission path in a radio access network, the method comprising the steps of:
receiving, by a base station, location information of a correspondent node from a mobile node;
establishing, by the base station, a new data transmission path to the correspondent node using the location information of the correspondent node and network contract information of a radio access network to which the mobile node desires to move; and
sending to the mobile node a notification indicating establishment of the new data transmission path;
wherein the base station includes one of a target base station to which the mobile node desires to move or desires to be newly connected, and a serving base station to which the mobile node is currently connected.

20. The method of claim 19, wherein the target base station and the serving base station support different access schemes.

21. The method of claim 20, wherein the location information of the correspondent node includes at least one of identification information of a base station to which the correspondent node is connected, Internet protocol information of the correspondent node, and identification information of the correspondent node.

22. A method for establishing a data transmission path in a radio access network, the method comprising the steps of:
receiving, by a mobile node, network contract information of a radio access network to which a target base station belongs, from the target base station;
determining, by the mobile node, a data transmission path to a correspondent node using location information of the correspondent node and network contract information of the radio access network; and
sending, by the mobile node, a request for establishment of the determined data transmission path, to the target base station;
wherein the target base station includes a base station to which the mobile node desires to move or desires to be newly connected.

23. The method of claim 22, wherein an access scheme supported by the target base station is different from an access scheme supported by a serving base station to which the mobile node is currently connected.

24. The method of claim 23, wherein the location information of the correspondent node includes at least one of identification information of a base station to which the correspondent node is connected, Internet protocol information of the correspondent node, and identification information of the correspondent node.

25. A device for establishing a data transmission path in a radio access network, wherein said device is adapted to operate according to one of claims 1 to 24.
